(19) Europäisches Patentamt / European Patent Office / Office européen des brevets

(11) **EP 4 132 168 A1**

(12) **EUROPEAN PATENT APPLICATION**
published in accordance with Art. 153(4) EPC

(43) Date of publication:
**08.02.2023 Bulletin 2023/06**

(21) Application number: **21784675.7**

(22) Date of filing: **06.04.2021**

(51) International Patent Classification (IPC):
**H04W 72/04** (2009.01)     **H04L 5/00** (1968.09)
**H04L 1/06** (1968.09)

(52) Cooperative Patent Classification (CPC):
**H04L 1/06; H04L 5/00; H04W 72/04**

(86) International application number:
**PCT/CN2021/085633**

(87) International publication number:
**WO 2021/204108 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2020 CN 202010277480**

(71) Applicant: **Sony Group Corporation
Tokyo 108-0075 (JP)**

(72) Inventor: **WANG, Xiaoxue
Beijing 100028 (CN)**

(74) Representative: **D Young & Co LLP
120 Holborn
London EC1N 2DY (GB)**

(54) **ELECTRONIC DEVICE, COMMUNICATION METHOD, AND STORAGE MEDIUM**

(57)     The present disclosure relates to electronic device, communication method and storage medium in a wireless communication system. An electronic device for user equipment (UE) comprises a processing circuitry configured to: select a set of transmission resources from a resource pool for a first Sidelink communication from the LTE to a first receiving UE; control to transmit 1st-stage Sidelink Control Information (SCI) for the first Sidelink communication to the first receiving UE so as to indicate the set of transmission resources; determine to preempt a portion of the set of transmission resources for another communication; and set a preemption indication in 2nd-stage SCI for the first Sidelink communication to indicate that the portion of the set of transmission resources is preempted.

FIG. 10A

## Description

### FIELD OF THE INVENTION

The present disclosure relates generally to Sidelink communication. More particularly, the present disclosure relates to electronic device, communication method, and storage medium for indicating preemption of transmission resources in the Sidelink communication.

### BACKGROUND

Traditional wireless communication networks rely on cellular network infrastructure, and even the communication between user equipments (UEs) needs to pass through and be managed by a base station (e.g., an eNB or a gNB) of the cellular network. That is, uplink communication and downlink communication between the UE and the base station always occur. However, as wireless communication applications become increasingly popular, mobile data traffic may be expected to further increase, and if the data traffic always needs to pass through the base station, capacity of the system and processing capacity of the base station may be exceeded.

The 5G New Radio (NR) provides support for the Sidelink communication, which allows UEs to communicate directly with each other through no base stations. One of characteristics of the Sidelink communication is to support the UE to autonomously select transmission resources for communication. For example, UE A may autonomously schedule resources for transmitting data to UE B. At this time, assuming that another UE C requests a service with a higher priority, then in a case of redundant transmission resources, UE A usually does not schedule UE C with resources which are duplicated with those for UE B, but in the case of resource shortage, UE A has no choice but to use (a part of) the resources originally allocated to UE B for UE C. This is also known as preemption of transmission resources. An obvious consequence is that UE B's data reception and decoding is affected because the data received by UE B is not entirely its own.

There are several possible ways to deal with the problem of resource preemption. For example, one way is retransmission relying on hybrid automatic repeat request (HARQ), i.e., the UE reports a negative acknowledgement (NACK) to trigger data retransmission when it cannot decode the data, but this leads to retransmission of the entire data transport block, resulting in a waste of communication resources. Another way is that the transmitter uses control signaling to notify the receiver of an occurrence of the preemption after the data transmission, but the additional control signaling will bring certain overhead, and there may be a situation that the control signaling fails to be detected.

Therefore, there needs an efficient and reliable mechanism for handling the transmission resource preemption in the Sidelink communication.

### SUMMARY OF THE INVENTION

The present disclosure provides an indication method and a corresponding handling mechanism for the preemption of transmission resources in the Sidelink communication. The above need is met by applying one or more aspects of the present disclosure.

A brief overview regarding the present disclosure is given below to provide a basic understanding on some aspects of the present disclosure. However, it will be appreciated that the overview is not an exhaustive description of the present disclosure. It is not intended to specify key portions or important portions of the present disclosure, nor to limit the scope of the present disclosure. It aims at merely describing some concepts about the present disclosure in a simplified form and serves as a preorder of a more detailed description to be given later.

According to one aspect of the present disclosure, there is provided an electronic device for user equipment (UE), comprising a processing circuitry configured to: select a set of transmission resources from a resource pool for a first Sidelink communication from the UE to a first receiving UE; control to transmit 1st-stage Sidelink Control Information (SCI) for the first Sidelink communication to the first receiving UE so as to indicate the set of transmission resources; determine to preempt a portion of the set of transmission resources for another communication; and set a preemption indication in 2nd-stage SCI for the first Sidelink communication to indicate that the portion of the set of transmission resources is preempted.

According to another aspect of the present disclosure, there is provided an electronic device for user equipment (UE), comprising a processing circuitry configured to: receive 1st-stage Sidelink Control Information (SCI) for a first Sidelink communication from a transmitting UE to the UE to determine a set of transmission resources selected by the transmitting UE for the first Sidelink communication; receive 2nd-stage SCI for the first Sidelink communication on the set of transport resources, the 2nd-stage SCI including a preemption indication indicating that a portion of the set of transport resources is preempted for another communication; and based on the preemption indication, receive and decode data transmitted in the first Sidelink communication.

According to yet another aspect of the present disclosure, there is provided a communication method, comprising: selecting a set of transmission resources from a resource pool for a first Sidelink communication from the UE to a first receiving UE; controlling to transmit 1st-stage Sidelink Control Information (SCI) for the first Sidelink communication to the first receiving UE so as to indicate the set of transmission resources; determining to preempt a portion of the set of transmission resources for another communication; and setting a preemption indication in 2nd-stage SCI for the first Sidelink communication to indicate that the portion of the set of transmission resources is preempted.

According to yet still another aspect of the present disclosure, there is provided a communication method, comprising: receiving 1st-stage Sidelink Control Information (SCI) for a first Sidelink communication from a transmitting UE to the UE to determine a set of transmission resources selected by the transmitting UE for the first Sidelink communication; receiving 2nd-stage SCI for the first Sidelink communication on the set of transport resources, the 2nd-stage SCI including a preemption indication indicating that a portion of the set of transport resources is preempted for another communication; and based on the preemption indication, receiving and decoding data transmitted in the first Sidelink communication.

According to one aspect of the present disclosure, there is provided a non-transitory computer readable storage medium storing executable instructions which, when executed, perform any of the above communication methods.

DESCRIPTION OF THE DRAWINGS

A better understanding of the present disclosure may be achieved by referring to a detailed description given hereinafter in connection with accompanying figures, wherein the same or similar reference signs are used to indicate the same or similar components throughout the figures. The figures are included in the specification and form a part of the specification along with the following detailed descriptions, for further illustrating embodiments of the present disclosure and for explaining the theory and advantages of the present disclosure. Wherein,

FIG. 1 shows an exemplary scenario of V2X supported by the 5G NR;

FIGS. 2A and 2B illustrate a radio protocol architecture for the Sidelink communication;

FIG. 3 illustrates a diagram of a frame structure in the NR communication system;

FIG. 4 shows a scenario in which UEs perform data transmission through the Sidelink communication by taking the V2X application as example;

FIG. 5 schematically shows a timing diagram for a transmitting UE to allocate resources to a first Sidelink communication for eMBB service and to a second Sidelink communication for URLLC service;

FIG. 6 is a flowchart showing the Sidelink communication process in FIG. 4;

FIG. 7 schematically shows the resource allocation of the first Sidelink communication for eMBB service and the second Sidelink communication for URLLC service;

FIG. 8A-8C illustrate examples of the preemption indication according to the present disclosure;

FIG. 9 shows an association between 1st-stage SCI, 2nd-stage SCI and data of the Sidelink communication;

FIGS. 10A and 10B illustrate an electronic device and a communication method therefor according to the present disclosures, respectively;

FIGS. 11A and 11B illustrate an electronic device and a communication method therefor according to the present disclosure, respectively;

FIG. 12 illustrates a schematic configuration example of a smartphone according to the present disclosure;

FIG. 13 illustrates a schematic configuration example of a car navigation apparatus according to the present disclosure.

Further features of the present invention will become apparent from the following description of exemplary embodiments with reference to the attached drawings.

DETAILED DESCRIPTION OF PREFERRED EMBODIMENTS

Various illustrative embodiments of the present disclosure will be described hereinafter with reference to the drawings. For purpose of clarity and simplicity, not all features are described in the specification. Note that, however, many implementation-specific settings can be made in practicing the embodiments of the present disclosure according to specific requirements, so as to achieve specific goals of the developers. Furthermore, it will be appreciated that the developing work will be a routine task, despite complex and tedious, for those skilled in the art who benefit from the present disclosure.

In addition, it should be noted that the figures illustrate only process steps and/or device structures that are closely related to the technical solutions according to the present disclosure, so as to avoid obscuring the present disclosure by unnecessary details. The following description of illustrative embodiments are merely illustrative and are not intended to limit the scope of the present disclosure and the applications thereof in any manner.

For convenient explanation of the technical solutions of the present disclosure, various aspects of the present disclosure will be described below in the context of 5G NR, and in particular, the Sidelink communication is described in an exemplary application scenario of V2X (Vehicle to Everything). However, it should be noted that this is not a limitation on the scope of application of the present disclosure. One or more aspects of the present disclosure can also be applied to various existing wireless communication systems, such as 4G LTE/LTE-A, or various wireless communication systems to be developed in future. The architectures, entities, functions, processes and the like as described in the following description can be found in the NR or other communication standards.

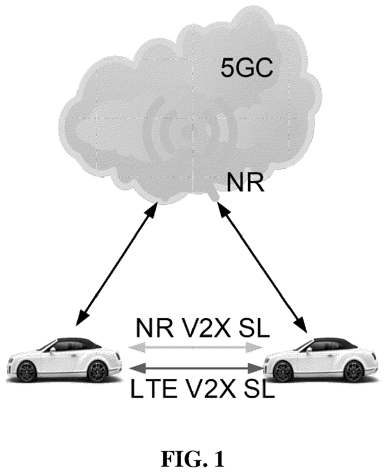

FIG. 1 shows an exemplary scenario of V2X supported by the 5G NR. In a standalone V2X scenario shown in FIG. 1, an in-vehicle device as the UE is connected to a 5G core network (5GC) through a radio access network (NG-RAN) node (e.g., gNB) of the NR communication system. In addition, in other V2X scenarios, the in-vehicle device may also be connected to a 4G core network or a 5G core network through an Evolved Universal Terrestrial Radio Access Network (E-UTRAN) node (e.g., eNB or ng-eNB). Hereinafter, eNB, gNB, ng-eNB and the like are collectively referred to as "a base station". In addition to the standalone V2X, there is also a V2X scenario of multi-radio access technology dual connection (MR-DC), which is not be described in detail here.

As shown in FIG. 1, the UE (the in-vehicle device) can not only communicate with the base station, but also perform a direct communication between UEs, that is, the Sidelink communication (sometimes also referred to as direct link communication). Unlike the uplink communication or downlink communication with the base station, the Sidelink communication allows the communication between UEs to not pass through the base station, thereby reducing the load on the access network, while also achieving lower latency. The Sidelink communication can be established, for example, via a direct link provided by "PC5" interface at each UE. Depending on control/configuration of the base station, NR Sidelink communication or LTE Sidelink communication is possible between in-vehicle devices. For convenience of description, the following description mainly focuses on the NR Sidelink communication, but it should be understood that one or more aspects of the present disclosure may also be applied to the LTE Sidelink communication or other similar inter-UE direct communication.

It should be noted that, although the in-vehicle device involved in the V2X service is often taken as an example of the UE in the specification and drawings of the present disclosure, the term "UE" in the present disclosure is not limited thereto, and has the full breadth of its usual meaning, including various terminal devices or elements thereof, such as a mobile phone, a laptop computer, a tablet computer, an in-vehicle communication device, a drone, or the like. Application examples of the UE will be described in detail in the following chapter.

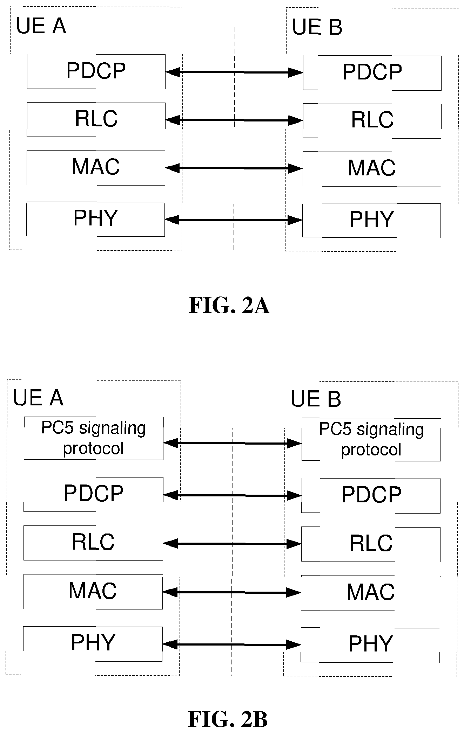

FIGS. 2A and 2B illustrate the NR radio protocol architecture for the Sidelink communication, wherein FIG. 2A shows the protocol stack for user plane, and FIG. 2B shows the protocol stack for control plane of one-to-one Sidelink communication. As shown in FIG. 2A, Access Stratum of the PC5 interface includes a physical layer (PHY), a medium access control (MAC) sublayer, a radio link control (RLC) sublayer and a packet data convergence protocol (PDCP) sublayer.

The relationship between these sublayers is that the PHY layer is the lowest layer and implements various physical layer signal processing to provide a transparent transmission function for signals, and the PHY layer provides transmission channels to the MAC sublayer, such as Physical Sidelink Broadcast Channel (PSBCH) that carries system-related information and synchronization-related information, Physical Sidelink Discovery Channel (PSDCH) that carries Sidelink Discovery messages, Physical Sidelink Control Channel (PSCCH) that carries control information, and Physical Sidelink Shared Channel (PSSCH) that carries data and control information. In addition, the MAC sublayer provides logical channels to the RLC sublayer, the RLC sublayer provides RLC channels to the PDCP sublayer, and the PDCP sublayer provides radio bearers to the SDAP sublayer.

As shown in FIG. 2B, in the control plane, the PC5 signaling protocol stack includes a PHY layer, a MAC sublayer, an RLC sublayer, a PDCP sublayer, and a PC5 signaling protocol. In particular, the MAC sublayer is responsible for resource selection for radio transmission, packet filtering for the Sidelink communication and the V2X Sidelink communication, transmission carrier selection for the V2X Sidelink communication, etc.

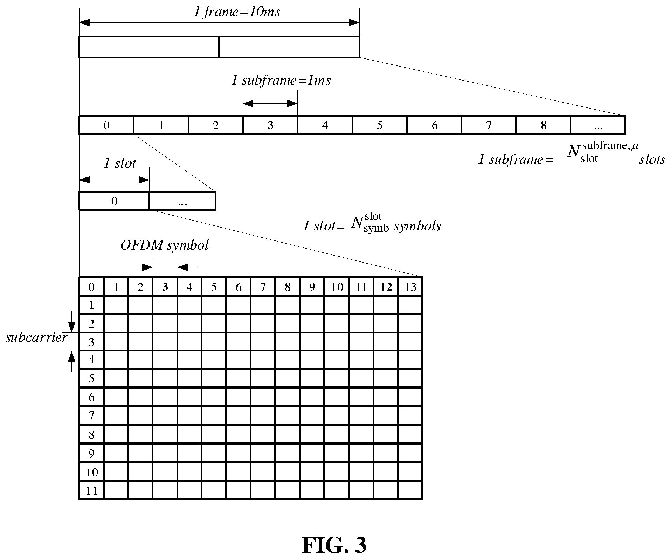

It should be noted that the term "transmission resources" or "resources" as used in the present disclosure refers to radio resources that are scheduled for transmission of control information and data, such as time-domain resources and frequency-domain resources. However, as understood by those skilled in the art, the transmission resources may also include, for example, spatial-domain resources, code-domain resources, or the like. The time-frequency transmission resources in the 5G NR are described below with reference to FIG. 3.

The downlink transmission, the uplink transmission and the Sidelink transmission of the NR are organized into frames. FIG. 3 shows a diagram of a frame structure in the NR communication system. As shown in FIG. 3, each frame has a length of 10ms and are divided into two half-frames of equal size, and are further dived into 10 subframes of equal size, each of which has a length of 1ms. Unlike the LTE communication system, the frame structure in the NR communication system has a flexible structure according to a subcarrier spacing. Each subframe has configurable time slots and may have $N_{\text{slot}}^{\text{subframe},\mu}$ consecutive time slots. Each time slot also has a configurable number of symbols, and may have $N_{\text{symb}}^{\text{slot}}$ OFDM symbols, so each subframe has a number $N_{\text{symb}}^{\text{subframe},\mu} = N_{\text{symb}}^{\text{slot}} N_{\text{slot}}^{\text{subframe},\mu}$ of consecutive symbols.

Table 1 below shows the number of symbols per slot, the number of slots per subframe and the number of symbols per subframe for different subcarrier spacing configurations $\mu$ (the value of $\mu$ may be 0, 1, 2, 3, 4) in the case of normal cyclic prefix, and Table 2 shows the number of symbols per slot, the number of slots per subframe and the number of symbols per subframe for different subcarrier spacing configurations $\mu$ (the value of $\mu$ may be 2) in the case of extended cyclic prefix. Each time slot includes several resource blocks (RBs). A time slot may be represented using a grid of resource elements (REs). For example, if the resource block of each time slot can contain 12 consecutive subcarriers in the frequency domain, and for the normal cyclic prefix, it can contain 14 consecutive OFDM symbols in the time domain, then each time slot can be allocated with $12 \times 14 = 168$ resource elements.

**Table 1: Number of OFDM symbols per slot, slots per frame, and slots per subframe for normal cyclic prefix.**

| $\mu$ | $N_{\text{symb}}^{\text{slot}}$ | $N_{\text{slot}}^{\text{frame}\mu}$ | $N_{\text{slot}}^{\text{subframe}\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2: Number of OFDM symbols per slot, slots per frame, and slots per subframe for extended cyclic prefix.

| $\mu$ | $N_{\text{symb}}^{\text{slot}}$ | $N_{\text{slot}}^{\text{frame}\mu}$ | $N_{\text{slot}}^{\text{subframe}\mu}$ |
|---|---|---|---|
| 2 | 12 | 40 | 4 |

The scheduling of transmission resources is usually on basis of one time slot, and the OFDM symbols in a time slot are allocated per UE for use in a continuous manner. Multi-slot scheduling and cross-slot scheduling are also feasible. Additionally, the NR supports a more efficient scheduling decision for low latency by allowing transmissions to be scheduled over a portion of a time slot, that is, the transmissions may not be limited to start from the beginning of the time slot, but can also start from any OFDM symbol in the time slot. This results in the lowest possible latency without sacrificing temporal dispersion robustness.

In the 5G NR, with respect to resource allocation of the Sidelink communication, the UE can adopt two resource allocation modes. Sidelink resource allocation mode 1 is base station-scheduled resource allocation, that is, when the UE has established a radio resource control (RRC) connection with the base station, it requests transmission resources from the base station, and then the base station schedules resources for the UE to transmit Sidelink control information and data.

Sidelink resource allocation mode 2 is UE-autonomous resource allocation. Specifically, the UE may by itself select resources from one or more resource pools and perform transport format selection to transmit Sidelink control information and data. A resource pool is a set of resources that can be selected by the UE for Sidelink transmission and/or reception. From the UE's perspective, the resource pool is inside the UE's bandwidth in Sidelink Bandwidth Part (BWP) and has a single numerology. When the UE is out of coverage of a cell, there may be one or more (e.g., up to 8) pre-configured resource pools, and when the UE is in coverage of the cell, one or more (e.g., up to 8) resource pools may be provided to the UE through RRC signaling. In a Sidelink control period, the UE can select one of the resource pools for the Sidelink communication. Once the resource pool is selected, the selection is valid throughout the Sidelink control period. After the current Sidelink control period ends, the UE may perform the resource pool selection again.

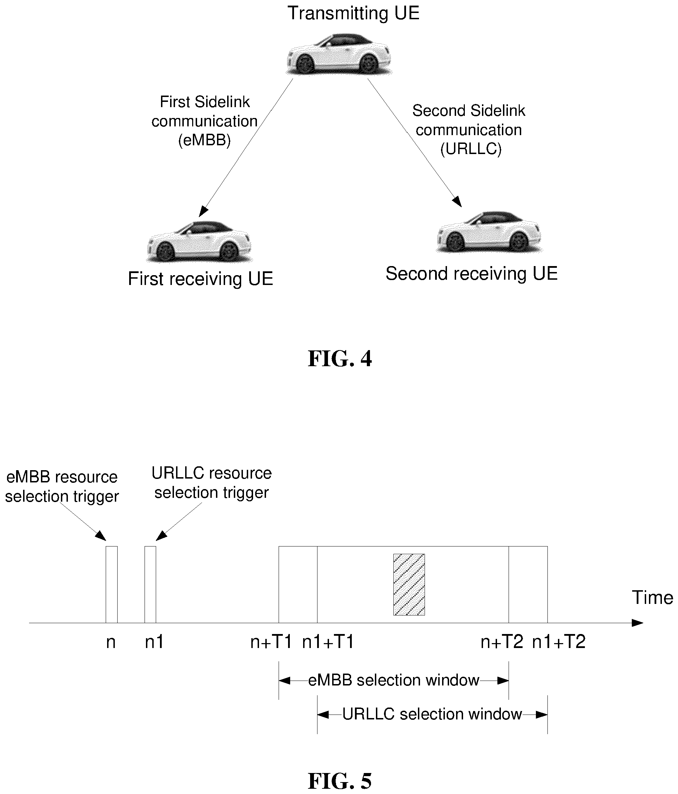

The UE is allowed to perform multiple Sidelink communications to different destinations within a single Sidelink control period. In the UE-autonomous resource allocation mode, the available transmission resources are relatively limited, and the resource preemption due to insufficient resources may occur. Detailed description is given below with reference to FIGS. 4 and 5.

FIG. 4 shows a scenario in which a UE performs data transmission through the Sidelink communication in the example V2X application. Hereinafter, the UE that transmits data is referred to as a "transmitting UE", and accordingly, a UE that receives the data is referred to as a "receiving UE". The data transmission may be triggered in response to the receiving UE initiating a service request. The transmitting UE can provide various communication services to the receiving UE, such as eMBB (Enhanced Mobile Broadband) service characterized by high bandwidth, URLLC (Ultra Reliable Low Latency Communication) service characterized by low latency and high reliability, mMTC (Massive Machine Type Communication) service characterized by massive accesses. Different services may have different priorities. For example, the URLLC service has a high requirement on latency, and requires as short processing time and transmission time as possible, so it can be given a high priority, while the eMBB service can be given a low priority, but this is not limiting.

Although two receiving UEs ("first receiving UE", "second receiving UE") are shown in FIG. 4, the number of receiving UEs is not limited thereto. In the example shown in FIG. 4, the transmitting UE may provide the first receiving UE with a first service, such as the eMBB service illustrated in FIG. 4, through a first Sidelink communication. Furthermore, the transmitting UE may provide the second receiving UE with a second service, such as the URLLC service illustrated in FIG. 4, through a second Sidelink communication. The first service and the second service may have different priorities. It should be understood that although FIG. 4 shows the eMBB service and the URLLC service as examples of services provided through the first Sidelink communication and the second Sidelink communication, this is only for ease of understanding, and the present disclosure is not limited thereto.

FIG. 5 schematically shows a timing diagram in which the transmitting UE allocates resources for the first Sidelink communication and the second Sidelink communication. As shown in FIG. 5, for example, in response to an eMBB service request from the first receiving UE (e.g., a request for high-quality music service), the resource selection for the eMBB data transmission is triggered at time n, and a selection window is (n+T1)~(n+T2). The transmitting UE may autonomously select transmission resources for the eMBB service within the selection window, such as several subchannels in a certain time slot. At time n1, the transmitting UE suddenly receives a URLLC service request (e.g., an accident warning service) from the second receiving UE, and triggers the resource selection for the URLLC data transmission, and the selection window is (n1+T1)~(n1+T2), but the available resources within this selection window have already been allocated to the eMBB service destined for the first receiving UE. Generally speaking, the priority of the URLLC service is higher than that of the eMBB service, and the transmitting UE should preferentially process the URLLC service request, but suspending the music service will affect the sound quality and the user experience of the first receiving UE. Therefore, in the case of insufficient transmission resources, a feasible solution is to send the high-quality audio data to the first receiving UE and the accident warning message to the second receiving UE over the same transmission resources. As shown in FIG. 5, the transmitting UE may allocate a portion of the transmission resources allocated to the first Sidelink communication (eMBB) (shown as shaded) to the second Sidelink communication (URLLC) instead, that is, there occurs a preemption of the transmission resources.

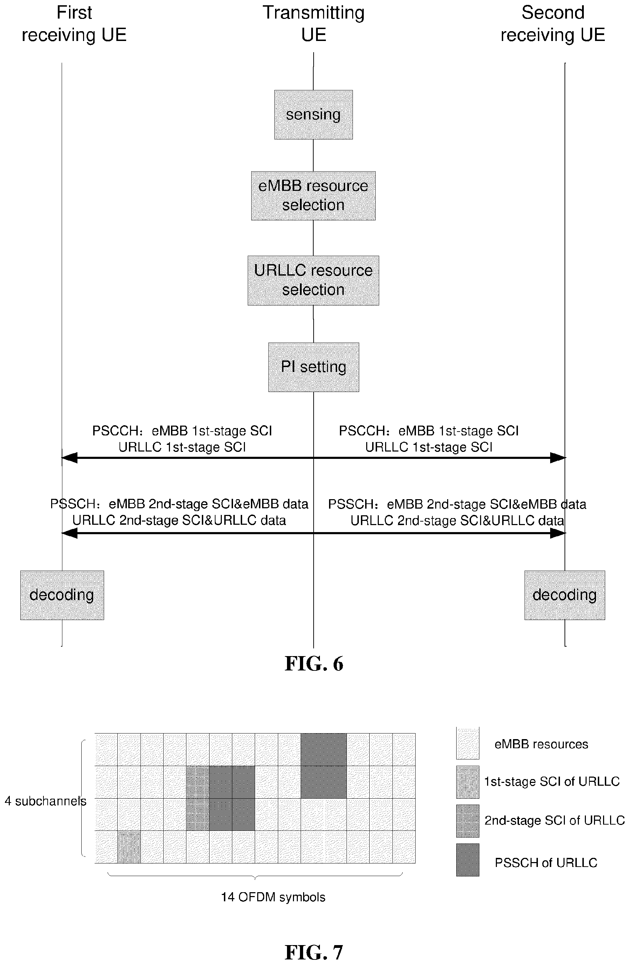

The process of the Sidelink communication in FIG. 4 is described below with reference to FIG. 6.

First, the transmitting UE may be triggered to determine resources for the eMBB data transmission to the first receiving UE. With the UE-autonomous resource selection mode, the transmitting UE can select resources from the resource pool by means of sensing. As introduced above, the resource pool at the transmitting UE may be pre-configured or scheduled through signaling. In the frequency domain, each resource pool consists of *numSubchannel* consecutive subchannels, and each subchannel consists of *subchannelsize* consecutive physical resource blocks (PRBs), where both of *numSubchannel* and *subchannelsize* are high-level parameters. During the sensing, the transmitting UE receives Sidelink Control Information (SCI) on PSCCH from one or more other UEs. The SCI on PSCCH is also referred to as "1st-stage SCI", which is used to schedule PSSCH and SCI on PSSCH (this SCI is referred to as "2nd-stage SCI"). The 1st-stage SCI may include one or more of the following fields:

- Priority, indicating the priority of the scheduled PSSCH;
- Frequency resource assignment, indicating frequency-domain resources of the scheduled PSSCH;
- Time resource assignment, indicating time-domain resources of the scheduled PSSCH;
- Resource reservation period;
- DMRS pattern;
- Format of 2nd-stage SCI;
- $\beta$ offset indicator;
- Number of DMRS ports;
- Modulation and coding scheme, etc.

By continuously receiving and decoding the 1st-stage SCI broadcasted by other UEs, i.e., by means of "Frequency resource assignment" and "Time resource assignment" fields, the transmitting UE will acquire knowledge about the time-frequency resources used by the other UEs for Sidelink communications, so as to learn which resources in the selected resource pool are already in use. Thus, the transmitting UE can select, from the resource pool, transmission resources for the eMBB data transmission, which have not been used by the other UEs, so as to to avoid inter-UE interference.

The transmitting UE is then triggered to determine resources for the URLLC data transmission to the second receiving UE. In the case discussed in this disclosure, the resources available within the URLLC resource selection window have been allocated to the first receiving UE, and the transmitting UE will determine to preempt a part of the transmission resources allocated to the first receiving UE at this time. FIG. 7 schematically shows the resource allocations to the first Sidelink communication for the eMBB service and the second Sidelink communication for the URLLC service. In the example shown in FIG. 7, the resources selected for the transmission of the SCI and eMBB data of the first Sidelink communication include 4 sub-channels (sub-channels 0-3) in one time slot (OFDM symbols 0-13), wherein a part of the transmission resources is preempted for the transmission of the SCI and URLLC data of the second Sidelink communication, as indicated by the more shaded squares. The second Sidelink communication should not preempt the transmission resources allocated to the 2nd-stage SCI (not shown in FIG. 7) of the first Sidelink communication so as to avoid the first receiving UE not being able to correctly receive and decode the 2nd-stage SCI.

After the resource selection is completed, the transmitting UE can generate the 1st-stage SCI for scheduling the PSSCHs of the first Sidelink communication and the second Sidelink communication by filling in corresponding fields to specify, for example, priority information, time-frequency resource information, DMRS pattern and the like of the PSSCH. In particular, the 1st-stage SCI also specifies the format of the 2nd-stage SCI associated with the scheduled PSSCH. After performing processing such as cyclic redundancy check (CRC) addition, channel coding, rate matching, and multiplexing on the 1st-stage SCI, the transmitting UE sends out the 1st-stage SCI through the PSCCH. On the receiving side, by receiving and decoding the 1st-stage SCI broadcasted by the transmitting UE, the first receiving UE and the second receiving UE will be able to know the information about the time-frequency resources for monitoring the PSSCH, the information about decoding the 2nd-stage SCI on the PSSCH, and the like.

Next, the transmitting UE generates the 2nd-stage SCI containing information for decoding the PSSCH. The 2nd-stage SCI may include one or more of the following information:

- HARQ process ID;
- New data indicator;
- Redundant version;
- Source ID;
- Destination ID;
- CSI request;
- Preemption indication, etc.

The 2nd-stage of SCI is subject to processing such as CRC addition, channel coding, rate matching, and the like. As a "transport block (TB)", data to be transmitted from the MAC layer goes through a series of processing such as CRC addition, code block segmentation, channel coding, HARQ process, rate matching, and the like. Thereafter, the 2nd-stage SCI and data are multiplexed onto the PSSCH.

According to an embodiment of the present disclosure, the transmitting UE sets a preemption indication (PI) in the 2nd-stage SCI. The preemption indication may use a reserved field or a newly added field in the 2nd-stage SCI to indicate whether the transmission resources of the PSSCH associated with the 2nd-stage SCI are preempted.

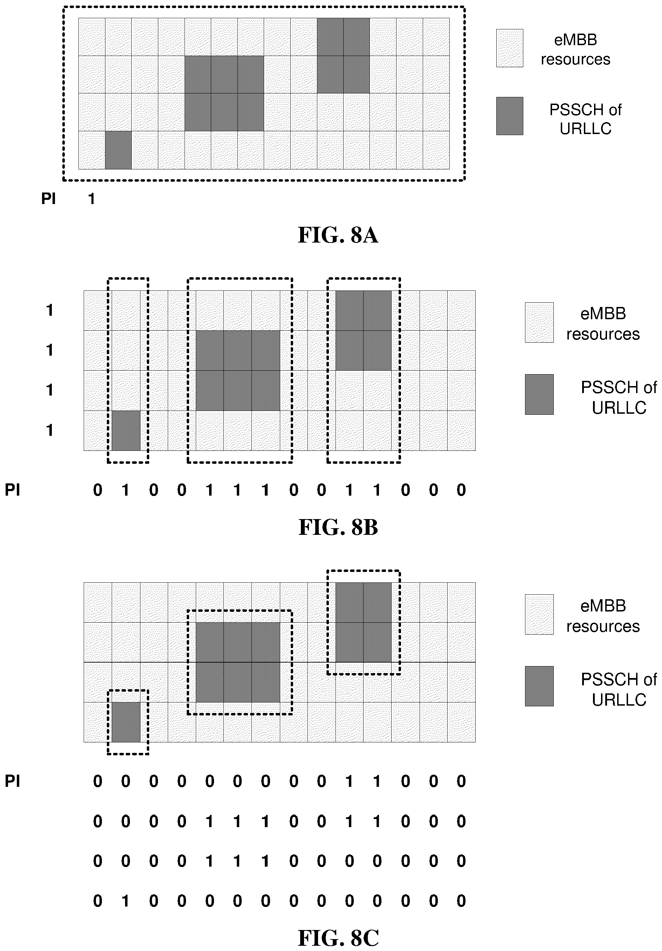

The preemption indication can take various forms. Several examples of the preemption indication for indicating the resource preemption shown in FIG. 7 according to the present disclosure are described below with reference to FIGS. 8A-8C.

As an example, the preemption indication in the 2nd-stage SCI may include 1 bit. In the case of the preemption of transmission resources, the transmitting UE may set this bit to a predefined value (e.g., '1'), otherwise it may be set to another value. As shown in FIG. 8A, the transmission resources of the first Sidelink communication are preempted, so the preemption indication in its 2nd-stage SCI is set to '1'. Accordingly, as the preemptor, the preemption indication in the 2nd-stage SCI of the second Sidelink communication may be set to '0' or null. The preemption indication functions on the entire set of allocated transmission resources (as shown by the dotted box), and only indicates the presence or absence of preemption, but cannot indicate which transmission resources are preempted.

As another example, the preemption indication may include ($N_{symbol}$+$N_{Subchannel}$) bits, where $N_{symbol}$ and $N_{Subchannel}$ respectively represent the number of symbols in the time dimension and the number of subchannels in the frequency dimension included by the allocated transmission resources. In the case of the preemption of transmission resources, the transmitting UE may set the preemption indication, so that $N_{symbol}$ bits therein indicate the symbols involved in the preempted transmission resources with a bitmap, and $N_{Subchannel}$ bits therein indicate subchannels involved in the preempted transmission resources with a bitmap. In the example shown in FIG. 8B, the preemption indication can be set to (010011100110001111), where the first 14 bits indicate that there exists the preemption in OFDM symbols 1, 4-6 and 9-10, and the last 4 bits indicate that there exists the preemption in Subchannel 0-3. Accordingly, as the preemptor, the preemption indication in the 2nd-stage SCI of the second Sidelink communication may be set to all 0s or null. It should be understood that the preemption indication is not limited to the order in which the bits representing the symbols come first and the bits representing the subchannel come last, nor is limited to indicate being preempted with '1' and indicate being not preempted with '0'. Such preemption indication functions on the related OFDM symbols and subchannels, i.e., the entire row and column of the resource grid, as indicated by the dashed boxes.

As yet another example, the preemption indication may include ($N_{symbol}$×$N_{Subchannel}$) bits, where $N_{symbol}$ and $N_{Subchannel}$ respectively represent the number of symbols in the time dimension and the number of subchannels in the frequency dimension included in the allocated transmission resources. In the case of the preemption of transmission resources, the transmitting UE may set a preemption indication, so that the ($N_{symbol}$×$N_{Subchannel}$) bits indicate specific transmission resources that are preempted with a bitmap. In the example shown in FIG. 8C, the preemption indication may be set to (000000000011000 00001110011000 00001110000000 010000000000000) to indicate that OFDM symbols 9-10 in Subchannel 0, OFDM symbols 4-6 and 9-10 in Subchannel 1, OFDM symbols 4-6 in Subchannel 2 and OFDM symbol 1 in Subchannel 3 are preempted. It should be understood that the preemption indication is not limited to the order of subchannels first and symbols later, nor is limited to indicate being preempted with '1' and being not preempted with '0'. Such preemption indication functions on the specific transmission resources that are preempted, i.e., the specific resource elements in the resource grid, as shown by the dotted box.

The three types of preemption indications as described above have increased indication precisions by degrees, and accordingly, also consume increased bits by degrees. In practice, which type of preemption indication to be used can be decided according to the required indication precision and the limit of the number of bits. For example, compared with the first and second types of preemption instructions, the number of bits consumed by the third type of preemption instruction is proportional to the maximum number of sub-channels that can be allocated. Therefore, through RRC configuration, when the number of sub-channels $N_{Subchannel}$<X, the third type of preemption indication may be used, and when the number of subchannels $N_{Subchannel}\geq$ X, the first or second type of preemption indication may be used, where X is a pre-configured parameter, such as 2, 3, 4, and so on.

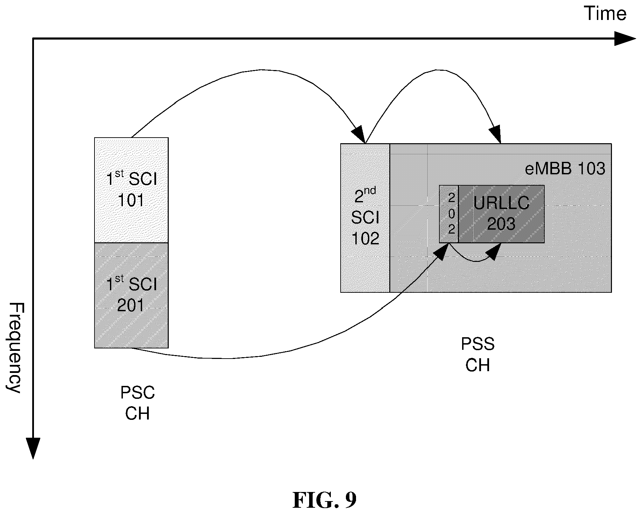

FIG. 9 schematically shows an association among data, 1st-stage SCI, and 2nd-stage SCI of the first and second Sidelink communications, wherein the 1st-stage SCI 101 is used for scheduling the 2nd-stage SCI 102 and the eMBB data 103 destined for the first receiving UE, and the 1st-stage SCI 201 is used for scheduling the 2nd-stage SCI 202 and the URLLC data 203 destined for the second receiving UE. It can be seen from FIG. 9 that the Sidelink communication to the second receiving UE has preempted resources originally belonging to the first receiving UE (a portion of the resources originally belonging to the first receiving UE is hollowed out). Note that the resources used to transmit the 2nd-stage SCI 102 should not be preempted. It should be understood that although FIG. 9 depicts the PSCCH carrying the 1st-stage SCI separately from the PSSCH carrying the 2nd-stage SCI and data, the two may be multiplexed in the same time slot. As illustrated in FIG. 9, after multiplexing, the second Sidelink communication appears to be embedded in the first Sidelink communication.

Returning to the flowchart in FIG. 6, the first receiving UE and the second receiving UE can receive the 1st-stage SCI 101 and 201 on the PSCCH, so as to learn various information such as the time-frequency resources allocated to them by the transmitting UE, the format of 2nd-stage SCI and the like. Based on the information, the first receiving UE will receive the 2nd-stage SCI 102 and the eMBB data 103 on the corresponding time-frequency resources, and the second receiving UE will receive the 2nd-stage SCI 202 and the URLLC data 203 on the corresponding time-frequency resources.

For the first receiving UE, it detects the preemption indication set in the 2nd-stage SCI, and thus learn that at least a portion of the transmission resources allocated to it is preempted. Depending on the type of preemption indication, the granularity of the preempted resources learned by the first receiving UE is different. For example, when the first type of preemption indication is used, the first receiving UE will learn only the presence of the preemption, but nothing about which transmission resources are preempted. As a result, the first receiving UE can abandon this received data, thereby avoiding unnecessary data buffering and decoding. When the second type of preemption indication is used, the first receiving UE will be able to learn the OFDM symbols and subchannels involved in the preemption, and as a result, the first receiving UE may not receive and decode the data associated with the indicated symbols and subchannels, but still needs to receive and decode data on the transmission resources that are not involved in the preemption. When the third type of preemption indication is used, the first receiving UE will be able to know exactly which transmission resources are preempted, and the data transmitted on these resources does not belong to it and thus does not need to be received and decoded, but the first receiving UE can receive and decode the data transmitted on the resources that are not preempted.

The transmitting UE may retransmit data that was not transmitted to the first receiving UE due to the resource preemption. Preferably, since it knows the details about the preemption, the transmitting UE can arrange data retransmission by itself without feedback from the first receiving UE. The transmitting UE may retransmit the data, such as the entire data transmission block (for the first type of preemption indication), the portion of the data on the transmission resources involved in the preemption (for the second or third type of preemption indication), to the first receiving UE through reserved resources or reselected resources.

Alternatively, the data retransmission may also be based on HARQ mechanism, for example, the first receiving UE can feed back a NACK to the transmitting UE through the PSFCH, and the transmitting UE can retransmit the data to the first receiving UE on reserved resources or reselected resources.

For the second receiving UE, since the preemption indication in the corresponding 2nd-stage SCI is not set to indicate the preemption, it can receive and decode its data based on the information carried in the SCI, which will not be described in detail here.

According to an embodiment of the present disclosure, the transmitting UE communicates information about the resource preemption to the receiving UE by setting a preemption indication in the 2nd-stage SCI associated with the PSSCH, whereby the receiving UE will be able to clearly learn which data does not belong to itself, thus avoiding the overhead of incorrect decoding. This indication method only adds a small number of bits in the 2nd-stage SCI, and saves resource overhead compared with the use of new control signaling, because in addition to the preemption indication, the new control signaling also needs to include identification information such as source ID, destination ID and the like to ensure the correct reception of the preemption instruction, and also reduces the failure of detection and waiting time of the new control signaling. Furthermore, the transmitting UE has knowledge of the resource preemption, can schedule data retransmission without receiving HARQ feedback from the UE, and may only need to retransmit data of the preempted resources.

Although it is described in the above embodiment that the transmission resources scheduled for the first receiving UE are preempted by the Sidelink communication from the transmitting UE to the second receiving UE, the use of the preempted transmission resources may not be limited to thereto, For example, the preempted transmission resources of the first receiving UE may also be used by other types of communication, such as non-Sidelink communication. In fact, the preempted transmission resources have nothing to do with the first receiving UE, and may be used by the transmitting UE to meet any other possible communication demands. In addition, in some cases, there may be more than one UE that preempts the transmission resources of the first receiving UE, for example, two or more.

Next, an electronic device and a communication method according to an embodiment of the present disclosure are described.

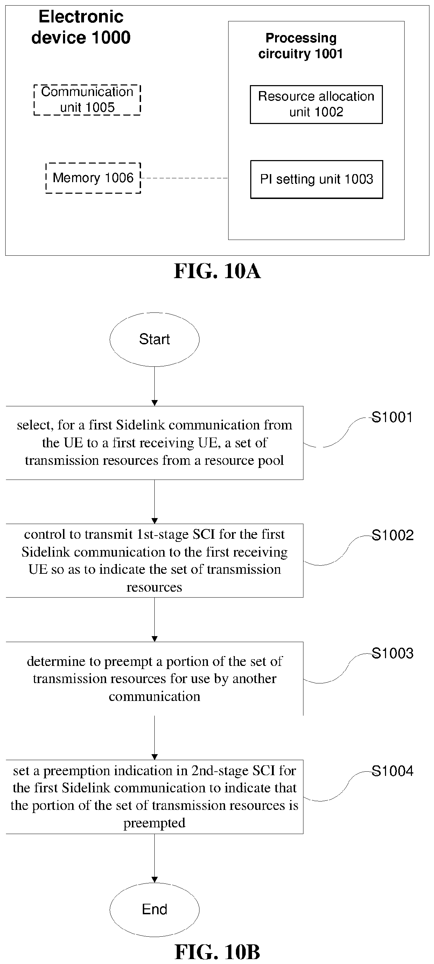

FIGS. 10A and 10B respectively illustrate an electronic device on the UE side and a communication method thereof according to the present disclosure. FIG. 10A illustrates a block diagram of an electronic device 1000 according to the present disclosure. The electronic device 1000 may be implemented as an electronic device of the transmitting a UE shown in FIG. 4. The electronic device 1000 may perform the Sidelink communication with an electronic device 1100 to be described below.

As shown in FIG. 10A, the electronic device 1000 includes a processing circuitry 1001 comprising at least a resource allocation unit 1002 and a PI setting unit 103. The processing circuitry 1001 may be configured to perform the communication method shown in FIG. 10B. The processing circuitry 1001 may refer to various implementations of digital circuitry, analog circuitry, or mixed-signal (a combination of analog signal and digital signal) circuitry that perform functions in a computing system. The processing circuitry may include, for example, circuits such as integrated circuit (IC), application specific integrated circuit (ASIC), portion or circuit of individual processor core, entire processor core, individual processor, programmable hardware device such as field programmable gate array (FPGA), and/or system including multiple processors.

The resource allocation unit 1002 of the processing circuitry 1001 is configured to perform transmission resource allocation for the Sidelink communication. Specifically, the resource allocation unit 1002 may be configured to select, for a first Sidelink communication from the transmitting UE to a first receiving UE, a set of transmission resources from a resource pool (i.e., to perform Step S1001 in FIG. 10B). The resource allocation unit 1002 may perform the resource allocation according to UE autonomous resource selection mode. The selected set of transmission resources may be transmission resources included in one time slot.

The resource allocation unit 1002 indicates information on the resource allocation to the first receiving UE, for example, by means of 1st-stage SCI (i.e., to perform Step S1002 in FIG. 10B). Based on the result of the resource allocation, the processing circuitry 1001 sets a field carrying the resource allocation information in the 1st-stage SCI of the first Sidelink communication, and controls to transmit the 1st-stage SCI on PSCCH, so that the first receiving UE will be able to receive and decode the 1st-stage SCI to learn the resources used to monitor 2nd-stage SCI and data, and so on.

In addition, the resource allocation unit 1002 may also be configured to determine to preempt a portion of the transmission resources of the first Sidelink communication for another communication in the case of insufficient resources (i.e., to perform Step S1003 in FIG. 10B). This portion of the transmission resources may be preempted for the second Sidelink communication from the transmitting UE to the second receiving UE, and the priority of the second Sidelink communication may be higher than the priority of the first Sidelink communication. The resources used to transmit the 2nd-stage SCI of the first Sidelink communication should not be preempted to avoid affecting the decoding of the 2nd-stage SCI of the first Sidelink communication.

The PI setting unit 1003 of the processing circuitry 1001 is configured to set a preemption indication in the 2nd-stage SCI of the first Sidelink communication (i.e., to perform Step S1004 in FIG. 10B). The preemption indication is used to indicate that the transmission resources of the first Sidelink communication are preempted. As an example, the preemption indication may use 1 bit to indicate whether the resource preemption occurs, or may indicate the resources involved in the preemption in form of a bitmap.

The electronic device 1000 may also include, for example, a communication unit 1005. The communication unit 1005 may be configured to perform the Sidelink communication with a receiving UE (e.g., the electronic device 1100 to be described below) under the control of the processing circuitry 1001, or another type of communication. In one example, the communication unit 1005 may be implemented as a transceiver, including communication components such as an antenna array and/or a radio frequency link. The communication unit 1005 is drawn with a dashed line, as it may also be located outside the electronic device 1000.

The electronic device 1000 may further comprise a memory 1006. The memory 1006 may store various data and instructions, such as programs and data for the operation of the electronic device 1000, various data generated by the processing circuitry 1001, and the like. The memory 1006 is drawn with a dashed line, as it may also be located within the processing circuitry 1001 or outside the electronic device 1000. The memory 1006 may be a volatile memory and/or a non-volatile memory. For example, the memory 1006 may include, but is not limited to, random access memory (RAM), dynamic random access memory (DRAM), static random access memory (SRAM), read only memory (ROM), flash memory.

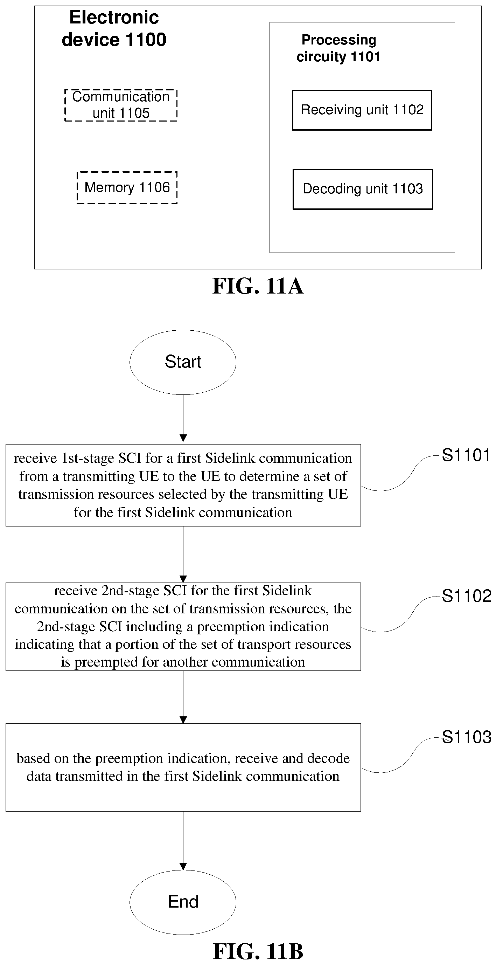

FIGS. 11A and 11B respectively illustrate an electronic device on the UE side and a communication method thereof according to the present disclosure. FIG. 11A illustrates a block diagram of an electronic device 1100 according to the present disclosure. The electronic device 1100 may be implemented as the electronic device of the first receiving UE as shown in FIG. 4. The electronic device 1100 may perform the Sidelink communication with the electronic device 1000 described above.

As shown in FIG. 11A, the electronic device 1100 includes a processing circuitry 1101, and the processing circuitry 1101 comprises at least a receiving unit 1102 and a decoding unit 1103. The processing circuitry 1101 may be configured to perform the communication method shown in FIG. 11B. Similar to processing circuitry 1001, the processing circuitry 1101 may refer to various implementations of digital circuitry, analog circuitry, or mixed-signal (a combination of analog signal and digital signal) circuitry that perform functions in a computing system. The processing circuitry may include, for example, circuits such as integrated circuit (IC), application specific integrated circuit (ASIC), portion or circuit of individual processor core, entire processor core, individual processor, programmable hardware device such as field programmable gate array (FPGA), and/or system including multiple processors.

The receiving unit 1102 of the processing circuitry 1101 is configured to receive 1st-stage SCI of the first Sidelink communication from the transmitting UE to a receiving UE to determine a set of transmission resources (i.e., to perform Step S1101 in FIG. 11B). The transmission of the 1st-stage SCI can be via PSCCH, for example.

The receiving unit 1102 is further configured to receive 2nd-stage SCI of the first Sidelink communication from the transmitting UE to the receiving UE (i.e., to perform Step S1102 in FIG. 11B). The 2nd-stage SCI of the first Sidelink communication includes a preemption indication, which may indicate whether the transmission resources of the first Sidelink communication are preempted by another communication, and optionally, information about the preempted transmission resources. For example, a portion of a set of transmission resources selected for the first Sidelink communication may be preempted for a second Sidelink communication from the transmitting UE to another receiving UE, and the second Sidelink communication may have a higher priority than the first Sidelink communication.

The decoding unit 1103 is configured to receive and decode data transmitted in the first Sidelink communication based on the preemption indication in the 2nd-stage SCI (i.e., to perform Step S1103 in FIG. 11B). For example, depending on a function scope of the preemption indication, the decoding unit 1103 may not decode the entire data transmission block or the portion of data on the preempted transmission resources.

The electronic device 1100 may also comprise a communication unit 1105, for example. The communication unit 1105 may be configured to perform Sidelink communication with the transmitting UE (e.g., the electronic device 1000 described above) under the control of the processing circuitry 1101. In one example, the communication unit 1105 may be implemented as a transceiver, including communication components such as an antenna array and/or radio frequency link. The communication unit 1105 is drawn with a dashed line, as it may also be located outside the electronic device 1000.

The electronic device 1100 may also include a memory 1106. The memory 1106 may store various data and instructions, such as programs and data for the operation of the electronic device 1100, various data generated by the processing circuitry 201, and the like. The memory 1106 is drawn with a dashed line, as it may also be located within the processing circuitry 1101 or outside the electronic device 1100. The memory 1106 may be a volatile memory and/or a non-volatile memory. For example, the memory 1106 may include, but is not limited to, random access memory (RAM), dynamic random access memory (DRAM), static random access memory (SRAM), read only memory (ROM), flash memory.

Various aspects of the embodiments of the present disclosure have been described above in detail, but it should be noted that, the structure, arrangement, type, number, etc. of the antenna array, ports, reference signals, communication devices, communication methods and the like are illustrated for description and are not intended to limit the aspects of the present disclosure to these specific examples.

It should be understood that the various units of the electronic device 1000 or 2000 described in the above embodiments are only logical modules divided according to the specific functions they implement, and are not used to limit specific implementations. In the actual implementation, the foregoing units may be implemented as individual physical entities, or may also be implemented by a single entity (for example, a processor (CPU or DSP, etc.), an integrated circuit, etc.).

**[Exemplary implementations of the present disclosure]**

According to the embodiments of the present disclosure, various implementations for practicing concepts of the present disclosure can be conceived, including but not limited to:

1). An electronic device for user equipment (UE), comprising a processing circuitry configured to: select, for a first Sidelink communication from the UE to a first receiving UE, a set of transmission resources from a resource pool; control to transmit 1st-stage Sidelink Control Information (SCI) for the first Sidelink communication to the first receiving UE so as to indicate the set of transmission resources; determine to preempt a portion of the set of transmission resources for another communication; and set a preemption indication in 2nd-stage SCI for the first Sidelink communication to indicate that the portion of the set of transmission resources is preempted.

2). The electronic device of 1), wherein the portion of the set of transmission resources is preempted for a second Sidelink communication from the UE to a second receiving UE.

3). The electronic device of 2), wherein a priority of the second Sidelink communication is higher than that of the first Sidelink communication.

4). The electronic device of 1) or 2), wherein the preemption indication comprises 1 bit, and wherein the processing circuitry is further configured to: in a case where the portion of the set of transmission resources is preempted, set the preemption indication to a predefined value.

5). The electronic device of 1) or 2), wherein the preemption indication comprises $(N_{symbol}+N_{Subchannel})$ bits and indicates symbols and subchannels involved in the preempted transmission resources in form of a bitmap, wherein $N_{symbol}$ and $N_{Subchannel}$ represent the number of symbols in time dimension and the number of subchannels in frequency dimension included in the set of transmission resources, respectively.

6). The electronic device of 1) or 2), wherein the preemption indication comprises $(N_{symbol} \times N_{Subchannel})$ bits and indicates specific preempted transmission resources in form of a bitmap, wherein $N_{symbol}$ and $N_{Subchannel}$ represent the number of symbols in time dimension and the number of subchannels in frequency dimension included in the set of transmission resources, respectively.

7). The electronic device of 1) or 2), wherein the processing circuitry is further configured to: retransmit data of the first Sidelink communication corresponding to the preempted transmission resources.

8). The electronic device of 1) or 2), wherein the preempted transmission resources do not include transmission resources used to transmit the 2nd-stage SCI for the first Sidelink communication.

9). The electronic device of 2), wherein the first Sidelink communication corresponds to an eMBB communication, the second Sidelink communication corresponds to a URLLC communication, and the set of transmission resources are within one time slot.

10). An electronic device for user equipment (UE), comprising a processing circuitry configured to: receive 1st-stage Sidelink Control Information (SCI) for a first Sidelink communication from a transmitting UE to the LTE to determine a set of transmission resources selected by the transmitting UE for the first Sidelink communication; receive 2nd-stage SCI for the first Sidelink communication on the set of transport resources, the 2nd-stage SCI including a preemption indication indicating that a portion of the set of transport resources is preempted for another communication; and based on the preemption indication, receive and decode data transmitted in the first Sidelink communication.

11). The electronic device of 10), wherein the portion of the set of transmission resources is preempted for a second Sidelink communications from the transmitting UE to a second receiving UE.

12). The electronic device of 11), wherein a priority of the second Sidelink communication is higher than that of the first Sidelink communication.

13). The electronic device of 10) or 11), wherein the preemption indication comprises 1 bit and is set to a predefined value in case where the portion of the set of transmission resources is preempted.

14). The electronic device of 10) or 11), wherein the preemption indication comprises $(N_{symbol}+N_{Subchannel})$ bits and indicates symbols and subchannels involved in the preempted transmission resources in form of a bitmap, wherein $N_{symbol}$ and $N_{Subchannel}$ represent the number of symbols in time dimension and the number of subchannels in frequency dimension included in the set of transmission resources, respectively.

15). The electronic device of 10) or 11), wherein the preemption indication comprises $(N_{symbol} \times N_{Subchannel})$ bits and indicates specific preempted transmission resources in form of a bitmap, wherein $N_{symbol}$ and $N_{Subchannel}$ represent the number of symbols in time dimension and the number of subchannels in frequency dimension of the set included in transmission resources, respectively.

16). The electronic device of 10) or 11), wherein the processing circuitry is further configured to: receive data of the first Sidelink communication corresponding to the preempted transmission resources and retransmitted by the transmitting UE.

17). The electronic device of 10) or 11), wherein the preempted transmission resources do not include transmission resources used to transmit the 2nd-stage SCI for the first Sidelink communication.

18). The electronic device of 10) or 11), wherein the processing circuitry is further configured to not receive and/or decode data transmitted on the preempted transmission resources.

19). The electronic device of 11), wherein the first Sidelink communication corresponds to an eMBB communication, the second Sidelink communication corresponds to a URLLC communication, and the set of transmission resources are within one time slot.

20). A communication method, comprising: selecting, for a first Sidelink communication from the UE to a first receiving UE, a set of transmission resources from a resource pool; controlling to transmit 1st-stage Sidelink Control Information (SCI) for the first Sidelink communication to the first receiving UE so as to indicate the set of transmission resources; de-

terming to preempt a portion of the set of transmission resources for another communication; and setting a preemption indication in 2nd-stage SCI for the first Sidelink communication to indicate that the portion of the set of transmission resources is preempted.

21). A communication method, comprising: receiving 1st-stage Sidelink Control Information (SCI) for a first Sidelink communication from a transmitting UE to the UE to determine a set of transmission resources selected by the transmitting UE for the first Sidelink communication; receiving 2nd-stage SCI for the first Sidelink communication on the set of transport resources, the 2nd-stage SCI including a preemption indication indicating that a portion of the set of transport resources is preempted for another communication; and based on the preemption indication, receiving and decoding data transmitted in the first Sidelink communication.

22). A non-transitory computer readable storage medium storing executable instructions which, when executed, perform the communication method 0f 20) or 21).

**[Application examples of the present disclosure]**

The technology of the present disclosure can be applied to various products.

For example, the electronic device 1000 and 1100 according to the embodiments of the present disclosure can be implemented as a variety of user devices or included in a variety of user devices.

The communication method according to the embodiments of the present disclosure may be implemented by various user devices; the methods and operations according to the embodiments of the present disclosure may be embodied as computer-executable instructions, stored in a non-transitory computer-readable storage medium, and can be performed by various user devices to implement one or more of the above-mentioned functions.

The technology according to the embodiments of the present disclosure can be made into various computer program products, which can be used in various user devices to implement one or more of the above-mentioned functions.

The base stations mentioned in the present disclosure can be implemented as any type of base stations, preferably, such as the macro gNB or ng-eNB defined in the 3GPP 5G NR standard. A gNB may be a gNB that covers a cell smaller than a macro cell, such as a pico gNB, micro gNB, and home (femto) gNB. Instead, the base station may be implemented as any other types of base stations such as a NodeB, eNodeB and a base transceiver station (BTS). The base station may include a main body configured to control wireless communication, and one or more remote radio heads (RRH), a wirelesss relay, a drone control tower, main control unit in an automated factory or the like disposed in a different place from the main body.

The user device may be implemented as a mobile terminal such as a smartphone, a tablet personal computer (PC), a notebook PC, a portable game terminal, a portable/dongle type mobile router, and a digital camera apparatus, or an in-vehicle terminal such as a car navigation device. The terminal device may also be implemented as a terminal (that is also referred to as a machine type communication (MTC) terminal) that performs machine-to-machine (M2M) communication, a drone, a sensor or actuator in an automated factory or the like. Furthermore, the terminal device may be a wireless communication module (such as an integrated circuit module including a single die) mounted on each of the above terminals.

Examples of the user device in which the present disclosure can be applied will be described briefly below.

First application example of user device

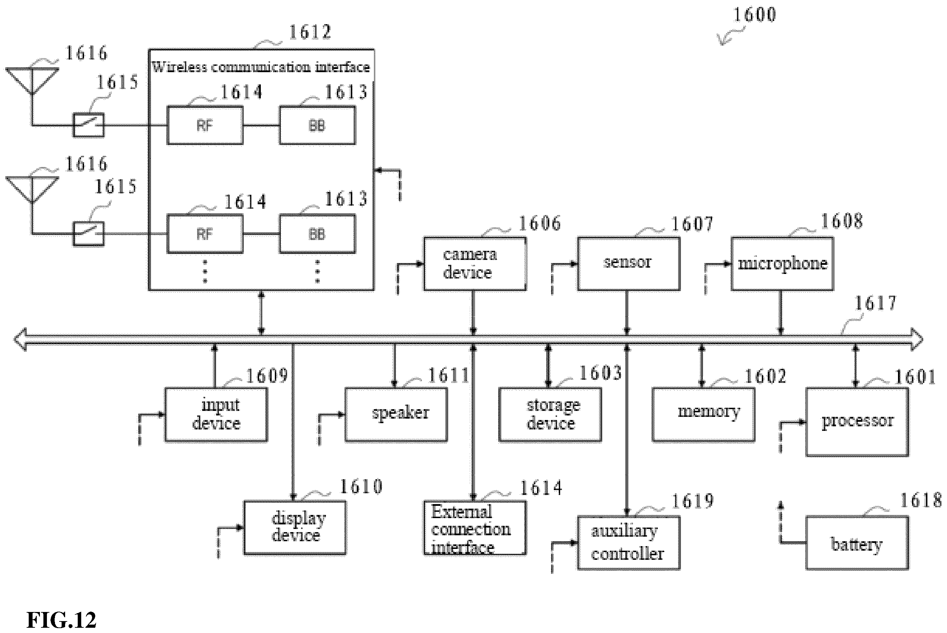

FIG. 12 is a block diagram showing an example of a schematic configuration of a smartphone 1600 to which the technology of the present disclosure can be applied. In an example, the smart phone 1600 may be implemented as the electronic device 1000 described with reference to FIG. 10A, or the electronic device 1100 described with reference to FIG. 11A.

The smartphone 1600 includes a processor 1601, a memory 1602, a storage device 1603, an external connection interface 1604, a camera device 1606, a sensor 1607, a microphone 1608, an input device 1609, a display device 1610, a speaker 1611, a wireless communication interface 1612, one or more antenna switches 1615, one or more antennas 1616, a bus 1617, a battery 1618, and an auxiliary controller 1619.

The processor 1601 may be, for example, a CPU or a system on chip (SoC), and controls functions of an application layer and another layer of the smartphone 1600. The processor 1601 may include or serve as the processing circuitry 1001 described with reference to FIG. 10A, or the processing circuitry 1101 described with reference to FIG. 11A. The memory 1602 includes a RAM and a ROM, and stores data and programs executed by the processor 1601. The storage device 1603 may include a storage medium such as a semiconductor memory and a hard disk. The external connection interface 1604 is an interface for connecting external devices such as a memory card and a universal serial bus (USB) device to the smartphone 1600.

The camera device 1606 includes an image sensor such as a charge-coupled device (CCD) and a complementary metal oxide semiconductor (CMOS), and generates a captured image. The sensor 1607 may include a set of sensors such as a measurement sensor, a gyroscope sensor, a geomagnetic sensor, and an acceleration sensor. The microphone 1608 converts a sound input to the smartphone 1600 into an audio signal. The input device 1609 includes, for example, a touch sensor, a keypad, a keyboard, a button, or a switch configured to detect a touch on the screen of the display device 1610, and receives an operation or information input from a user. The display device 1610 includes a screen such as a liquid crystal display (LCD) and an organic light emitting diode (OLED) display, and displays an output image of the smartphone 1600. The speaker 1611 converts an audio signal output from the smartphone 1600 into a sound.

The wireless communication interface 1612 supports any cellular communication scheme such as 4G LTE, 5G NR or the like, and performs wireless communication. The wireless communication interface 1612 may generally include, for example, a BB processor 1613 and an RF circuit 1614. The BB processor 1613 may perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmits and receives wireless signals via the antenna 1616. The wireless communication interface 1612 may be a chip module on which a BB processor 1613 and an RF circuit 1614 are integrated. As shown in FIG. 12, the wireless communication interface 1612 may include multiple BB processors 1613 and multiple RF circuits 1614. Although FIG. 12 illustrates an example in which the wireless communication interface 1612 includes a plurality of BB processors 1613 and a plurality of RF circuits 1614, the wireless communication interface 1612 may also include a single BB processor 1613 or a single RF circuit 1614.

In addition, in addition to the cellular communication scheme, the wireless communication interface 1612 may support other types of wireless communication scheme, such as a short-range wireless communication scheme, a near field communication scheme, and a wireless local area network (LAN) scheme. In this case, the wireless communication interface 1612 may include a BB processor 1613 and an RF circuit 1614 for each wireless communication scheme.

Each of the antenna switches 1615 switches a connection destination of the antenna 1616 between a plurality of circuits included in the wireless communication interface 1612 (for example, circuits for different wireless communication schemes).

The antennas 1616 includes multiple antenna elements, such as multiple antenna arrays for large-scale MIMO. The antennas 1616, for example, can be arranged into the antenna array matrix, and are used for the wireless communication interface 1612 to transmit and receive wireless signals. The smart phone 1600 can includes one or more antenna panels (not shown).

In addition, the smartphone 1600 may include an antenna 1616 for each wireless communication scheme. In this case, the antenna switch 1615 may be omitted from the configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the wireless communication interface 1612, and the auxiliary controller 1619 to each other. The battery 1618 supplies power to each block of the smartphone 1600 shown in FIG. 12 via a feeder, and the feeder is partially shown as a dotted line in the figure. The auxiliary controller 1619 operates the minimum necessary functions of the smartphone 1600 in the sleep mode, for example.

In the smart phone 1600 shown in FIG. 12, one or more components included in the processing circuitry may be implemented in the wireless communication interface 1612. Alternatively, at least a part of these components may be implemented in the processor 1601 or the auxiliary controller 1619. As an example, the smart phone 1600 includes a part (for example, the BB processor 1613) or the whole of the wireless communication interface 1612, and/or a module including the processor 1601 and/or the auxiliary controller 1619, and one or more components may be Implemented in this module. In this case, the module may store a program that allows processing to function as one or more components (in other words, a program for allowing the processor to perform operations of one or more components), and may execute the program. As another example, a program for allowing the processor to function as one or more components may be installed in the smart phone 1600, and the wireless communication interface 1612 (for example, the BB processor 1613), the processor 1601, and/or the auxiliary The controller 1619 can execute this program. As described above, as a device including one or more components, a smart phone 1600 or a module may be provided, and a program for allowing a processor to function as one or more components may be provided. In addition, a readable medium in which the program is recorded may be provided.

Second application example of user device

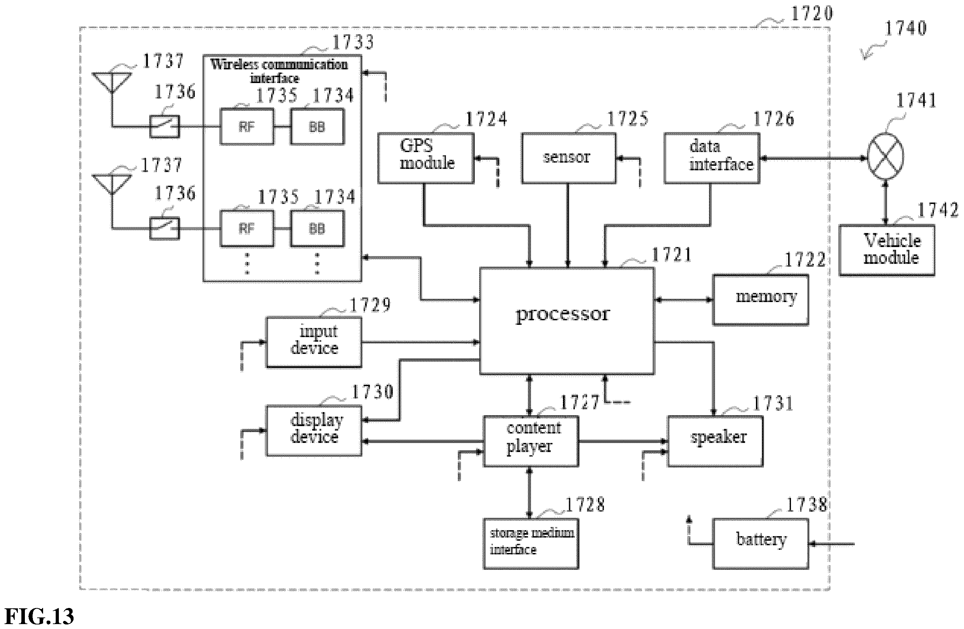

FIG. 13 is a block diagram showing an example of a schematic configuration of a car navigation device 1720 to which the technology of the present disclosure can be applied. The car navigation device 1720 may be implemented as the electronic device 1000 described with reference to FIG. 10A, or the electronic device 1100 described with reference to FIG. 11A. The car navigation device 1720 includes a processor 1721, a memory 1722, a global positioning system (GPS) module 1724, a sensor 1725, a data interface 1726, a content player 1727, a storage medium interface 1728, an input device 1729, a display device 1730, a speaker 1731, and a wireless communication interface 1733, one or more antenna switches 1736, one or more antennas 1737, and a battery 1738. In one example, the car navigation device 1720 can be implemented as the UE described in the present disclosure.

The processor 1721 may be, for example, a CPU or a SoC, and controls navigation functions and other functions of the car navigation device 1720. The memory 1722 includes a RAM and a ROM, and stores data and programs executed by the processor 1721.

The GPS module 1724 uses a GPS signal received from a GPS satellite to measure the position (such as latitude, longitude, and altitude) of the car navigation device 1720. The sensor 1725 may include a set of sensors such as a gyroscope sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in a storage medium such as a CD and a DVD, which is inserted into the storage medium interface 1728. The input device 1729 includes, for example, a touch sensor, a button, or a switch configured to detect a touch on the screen of the display device 1730, and receives an operation or information input from a user. The display device 1730 includes a screen such as an LCD or OLED display, and displays an image of a navigation function or reproduced content. The speaker 1731 outputs the sound of the navigation function or the reproduced content.

The wireless communication interface 1733 supports any cellular communication scheme such as 4G LTE or 5G NR, and performs wireless communication. The wireless communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The wireless communication interface 1733 may also be a chip module on which a BB processor 1734 and an RF circuit 1735 are integrated. As shown in FIG. 13, the wireless communication interface 1733 may include a plurality of BB processors 1734 and a plurality of RF circuits 1735. Although FIG. 13 shows an example in which the wireless communication interface 1733 includes a plurality of BB processors 1734 and a plurality of RF circuits 1735, the wireless communication interface 1733 may also include a single BB processor 1734 or a single RF circuit 1735.

In addition, in addition to the cellular communication scheme, the wireless communication interface 1733 may support other types of wireless communication scheme, such as a short-range wireless communication scheme, a near field communication scheme, and a wireless LAN scheme. In this case, the wireless communication interface 1733 may include a BB processor 1734 and an RF circuit 1735 for each wireless communication scheme.

Each of the antenna switches 1736 switches the connection destination of the antenna 1737 between a plurality of circuits included in the wireless communication interface 1733, such as circuits for different wireless communication schemes.

The antennas 1737 includes multiple antenna elements, such as multiple antenna arrays for large-scale MIMO. The antennas 1737, for example, can be arranged into the antenna array matrix, and are used for the wireless communication interface 1733 to transmit and receive wireless signals.

In addition, the car navigation device 1720 may include an antenna 1737 for each wireless communication scheme. In this case, the antenna switch 1736 may be omitted from the configuration of the car navigation device 1720.

The battery 1738 supplies power to each block of the car navigation device 1720 shown in FIG. 13 via a feeder, and the feeder is partially shown as a dotted line in the figure. The battery 1738 accumulates power provided from the vehicle.

In the car navigation device 1720 shown in FIG. 13, one or more components included in the processing circuitry can be implemented in the wireless communication interface 1733. Alternatively, at least a part of these components may be implemented in the processor 1721. As an example, the car navigation device 1720 includes a part (for example, the BB processor 1734) or the whole of the wireless communication interface 1733, and/or a module including the processor 1721, and one or more components may be implemented in the module. In this case, the module may store a program that allows processing to function as one or more components (in other words, a program for allowing the processor to perform operations of one or more components), and may execute the program. As another example, a program for allowing the processor to function as one or more components may be installed in the car navigation device 1720, and the wireless communication interface 1733 (for example, the BB processor 1734) and/or the processor 1721 may Execute the procedure. As described above, as a device including one or more components, a car navigation device 1720 or a module may be provided, and a program for allowing the processor to function as one or more components may be provided. In addition, a readable medium in which the program is recorded may be provided.

The technology of the present disclosure may also be implemented as an in-vehicle system (or vehicle) 1740 including one or more of a car navigation device 1720, an in-vehicle network 1741, and a vehicle module 1742. The vehicle module 1742 generates vehicle data such as vehicle speed, engine speed, and failure information, and outputs the generated data to the in-vehicle network 1741.

Although the illustrative embodiments of the present disclosure have been described with reference to the accompanying drawings, the present disclosure is certainly not limited to the above examples. Those skilled in the art may achieve various adaptions and modifications within the scope of the appended claims, and it will be appreciated that these adaptions and modifications certainly fall into the scope of the technology of the present disclosure.

For example, in the above embodiments, the multiple functions included in one module may be implemented by separate means. Alternatively, in the above embodiments, the multiple functions included in multiple modules may be implemented by separate means, respectively. In additions, one of the above functions may be implemented by multiple modules. Needless to say, such configurations are included in the scope of the technology of the present disclosure.

In this specification, the steps described in the flowcharts include not only the processes performed sequentially in chronological order, but also the processes performed in parallel or separately but not necessarily performed in chronological order. Furthermore, even in the steps performed in chronological order, needless to say, the order may be changed appropriately.

Although the present disclosure and its advantages have been described in detail, it will be appreciated that various changes, replacements and transformations may be made without departing from the spirit and scope of the present disclosure as defined by the appended claims. In addition, the terms "include", "comprise" or any other variants of the embodiments of the present disclosure are intended to be non-exclusive inclusion, such that the process, method, article or device including a series of elements includes not only these elements, but also those that are not listed specifically, or those that are inherent to the process, method, article or device. In case of further limitations, the element defined by the sentence "include one" does not exclude the presence of additional same elements in the process, method, article or device including this element.

**Claims**

1. An electronic device for user equipment (LTE), comprising:
   a processing circuitry configured to:

   select, for a first Sidelink communication from the UE to a first receiving UE, a set of transmission resources from a resource pool;
   control to transmit 1st-stage Sidelink Control Information (SCI) for the first Sidelink communication to the first receiving LTE so as to indicate the set of transmission resources;
   determine to preempt a portion of the set of transmission resources for use by another communication; and

   set a preemption indication in 2nd-stage SCI for the first Sidelink communication to indicate that the portion of the set of transmission resources is preempted.

2. The electronic device of claim 1, wherein the portion of the set of transmission resources is preempted for a second Sidelink communication from the LTE to a second receiving UE.

3. The electronic device of claim 2, wherein a priority of the second Sidelink communication is higher than that of the first Sidelink communication.

4. The electronic device of claim 1 or 2, wherein the preemption indication comprises 1 bit, and wherein the processing circuitry is further configured to: in a case where the portion of the set of transmission resources is preempted, set the preemption indication to a predefined value.

5. The electronic device of claim 1 or 2, wherein the preemption indication comprises $(N_{symbol}+N_{Subchannel})$ bits and indicates symbols and subchannels involved in the preempted transmission resources in form of a bitmap, wherein $N_{symbol}$ and $N_{Subchannel}$ represent the number of symbols in time dimension and the number of subchannels in frequency dimension included in the set of transmission resources, respectively.

6. The electronic device of claim 1 or 2, wherein the preemption indication comprises $(N_{symbol}\times N_{Subchannel})$ bits and indicates specific preempted transmission resources in form of a bitmap, wherein $N_{symbol}$ and $N_{Subchannel}$ represent the number of symbols in time dimension and the number of subchannels in frequency dimension included in the set of transmission resources, respectively.

7. The electronic device of claim 1 or 2, wherein the processing circuitry is further configured to: retransmit data of the first Sidelink communication corresponding to the preempted transmission resources.

8. The electronic device of claim 1 or 2, wherein the preempted transmission resources do not include transmission resources used to transmit the 2nd-stage SCI for the first Sidelink communication.

9. The electronic device of claim 2, wherein the first Sidelink communication corresponds to an eMBB communication, the second Sidelink communication corresponds to a URLLC communication, and the set of transmission resources are within one time slot.

**10.** An electronic device for user equipment (LTE), comprising:

a processing circuitry configured to:

receive 1st-stage Sidelink Control Information (SCI) for a first Sidelink communication from a transmitting UE to the LTE to determine a set of transmission resources selected by the transmitting UE for the first Sidelink communication;
receive 2nd-stage SCI for the first Sidelink communication on the set of transport resources, the 2nd-stage SCI including a preemption indication indicating that a portion of the set of transport resources is preempted for another communication; and
based on the preemption indication, receive and decode data transmitted in the first Sidelink communication.

**11.** The electronic device of claim 10, wherein the portion of the set of transmission resources is preempted for a second Sidelink communications from the transmitting UE to a second receiving UE.

**12.** The electronic device of claim 11, wherein a priority of the second Sidelink communication is higher than that of the first Sidelink communication.

**13.** The electronic device of claim 10 or 11, wherein the preemption indication comprises 1 bit and is set to a predefined value in case where the portion of the set of transmission resources is preempted.

**14.** The electronic device of claim 10 or 11, wherein the preemption indication comprises $(N_{symbol}+N_{Subchannel})$ bits and indicates symbols and subchannels involved in the preempted transmission resources in form of a bitmap, wherein $N_{symbol}$ and $N_{Subchannel}$ represent the number of symbols in time dimension and the number of subchannels in frequency dimension included in the set of transmission resources, respectively.

**15.** The electronic device of claim 10 or 11, wherein the preemption indication comprises $(N_{symbol}{\times}N_{Subchannel})$ bits and indicates specific preempted transmission resources in form of a bitmap, wherein $N_{symbol}$ and $N_{Subchannel}$ represent the number of symbols in time dimension and the number of subchannels in frequency dimension of the set included in transmission resources, respectively.

**16.** The electronic device of claim 10 or 11, wherein the processing circuitry is further configured to:
receive data of the first Sidelink communication corresponding to the preempted transmission resources and retransmitted by the transmitting UE.

**17.** The electronic device of claim 10 or 11, wherein the preempted transmission resources do not include transmission resources used to transmit the 2nd-stage SCI for the first Sidelink communication.

**18.** The electronic device of claim 10 or 11, wherein the processing circuitry is further configured to not receive and/or decode data transmitted on the preempted transmission resources.

**19.** The electronic device of claim 11, wherein the first Sidelink communication corresponds to an eMBB communication, the second Sidelink communication corresponds to a URLLC communication, and the set of transmission resources are within one time slot.

**20.** A communication method, comprising:

Selecting, for a first Sidelink communication from the UE to a first receiving UE, a set of transmission resources from a resource pool;
controlling to transmit 1st-stage Sidelink Control Information (SCI) for the first Sidelink communication to the first receiving UE so as to indicate the set of transmission resources;
determining to preempt a portion of the set of transmission resources for use by another communication; and
setting a preemption indication in 2nd-stage SCI for the first Sidelink communication to indicate that the portion of the set of transmission resources is preempted.

**21.** A communication method, comprising:

receiving 1st-stage Sidelink Control Information (SCI) for a first Sidelink communication from a transmitting LTE to the LTE to determine a set of transmission resources selected by the transmitting LTE for the first Sidelink communication;
receiving 2nd-stage SCI for the first Sidelink communication on the set of transport resources, the 2nd-stage SCI including a preemption indication indicating that a portion of the set of transport resources is preempted for another communication; and
based on the preemption indication, receiving and decoding data transmitted in the first Sidelink communication.

**22.** A non-transitory computer readable storage medium storing executable instructions which, when executed, perform the communication method of any of claims 20 or 21.

5GC

NR

NR V2X SL

LTE V2X SL

**FIG. 1**

**FIG. 2A**

**FIG. 2B**

1 frame=10ms

1 subframe=1ms

| 0 | 1 | 2 | **3** | 4 | 5 | 6 | 7 | **8** | ... |

$1\ subframe = N_{\text{slot}}^{\text{subframe},\mu}\ slots$

1 slot

| 0 | ... |

$1\ slot = N_{\text{symb}}^{\text{slot}}\ symbols$

OFDM symbol

subcarrier

| 0 | 1 | 2 | **3** | 4 | 5 | 6 | 7 | **8** | 9 | 10 | 11 | **12** | 13 |
|---|---|---|---|---|---|---|---|---|---|----|----|----|----|
| 1 | | | | | | | | | | | | | |
| 2 | | | | | | | | | | | | | |
| 3 | | | | | | | | | | | | | |
| 4 | | | | | | | | | | | | | |
| 5 | | | | | | | | | | | | | |
| 6 | | | | | | | | | | | | | |
| 7 | | | | | | | | | | | | | |
| 8 | | | | | | | | | | | | | |
| 9 | | | | | | | | | | | | | |
| 10 | | | | | | | | | | | | | |
| 11 | | | | | | | | | | | | | |

**FIG. 3**

Transmitting UE

First Sidelink
communication
(eMBB)

Second Sidelink
communication
(URLLC)

First receiving UE

Second receiving UE

**FIG. 4**

eMBB resource
selection trigger

URLLC resource
selection trigger

Time

n    n1         n+T1  n1+T1              n+T2  n1+T2

eMBB selection window

URLLC selection window

**FIG. 5**

**FIG. 6**

**FIG. 7**

eMBB resources

PSSCH of URLLC

PI    1

**FIG. 8A**

1
1
1
1

eMBB resources

PSSCH of URLLC

PI    0  1  0  0  1  1  1  0  0  1  1  0  0  0

**FIG. 8B**

eMBB resources

PSSCH of URLLC

PI    0  0  0  0  0  0  0  0  0  1  1  0  0  0

      0  0  0  0  1  1  1  0  0  1  1  0  0  0

      0  0  0  0  1  1  1  0  0  0  0  0  0  0

      0  1  0  0  0  0  0  0  0  0  0  0  0  0

**FIG. 8C**

Time

Frequency

1st SCI
101

1st SCI
201

2nd
SCI
102

eMBB 103

202

URLLC
203

PSC
CH

PSS
CH

**FIG. 9**

**Electronic
device 1000**

**Processing
circuitry 1001**

Communication
unit 1005

Resource allocation
unit 1002

Memory 1006

PI setting unit 1003

**FIG. 10A**

Start

select, for a first Sidelink communication from
the UE to a first receiving UE, a set of
transmission resources from a resource pool

S1001

control to transmit 1st-stage SCI for the first
Sidelink communication to the first receiving
UE so as to indicate the set of transmission
resources

S1002

determine to preempt a portion of the set of
transmission resources for use by another
communication

S1003

set a preemption indication in 2nd-stage SCI for
the first Sidelink communication to indicate that
the portion of the set of transmission resources is
preempted

S1004

End

**FIG. 10B**

**Electronic device 1100**

**Processing circuity 1101**

Communication unit 1105

Receiving unit 1102

Memory 1106

Decoding unit 1103

## FIG. 11A

Start

receive 1st-stage SCI for a first Sidelink communication from a transmitting UE to the UE to determine a set of transmission resources selected by the transmitting UE for the first Sidelink communication — S1101

receive 2nd-stage SCI for the first Sidelink communication on the set of transmission resources, the 2nd-stage SCI including a preemption indication indicating that a portion of the set of transport resources is preempted for another communication — S1102

based on the preemption indication, receive and decode data transmitted in the first Sidelink communication — S1103

End

## FIG. 11B

FIG.12

**FIG.13**

## INTERNATIONAL SEARCH REPORT

| | International application No. |
|---|---|
| | **PCT/CN2021/085633** |

**A.    CLASSIFICATION OF SUBJECT MATTER**

H04W 72/04(2009.01)i;  H04L 5/00(2006.01)i;  H04L 1/06(2006.01)i

According to International Patent Classification (IPC) or to both national classification and IPC

**B.    FIELDS SEARCHED**

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 直通, 侧行, 侧边, 侧链, 抢占, 占用, 复用, 指示, 控制信息, 符号, 信道, 重传, sidelink, SL, PC5, preemption, pre-emption, indicator, indication, SCI, 1st stage SCI, 2nd stage SCI, PI, PSCCH, PSSCH, symbol, channel

**C.    DOCUMENTS CONSIDERED TO BE RELEVANT**

| Category* | Citation of document, with indication, where appropriate, of the relevant passages | Relevant to claim No. |
|---|---|---|
| PX | CN 111510872 A (CHINA ACADEMY OF INFORMATION AND COMMUNICATIONS TECHNOLOGY) 07 August 2020 (2020-08-07)<br>description, paragraphs [0026]-[0080] | 1-22 |
| X | CN 110248412 A (HUAWEI TECHNOLOGIES CO., LTD.) 17 September 2019 (2019-09-17)<br>description paragraphs [0042]-[0054], [0130]-[0206], figures 10, 11 | 1-22 |
| A | CN 108633023 A (SPREADTRUM COMMUNICATIONS SHANGHAI INC.) 09 October 2018 (2018-10-09)<br>entire document | 1-22 |
| A | CN 108141847 A (SHARP CORPORATION) 08 June 2018 (2018-06-08)<br>entire document | 1-22 |
| A | LENOVO et al. "Discussion on Resource Allocation for NR Sidelink Mode 2"<br>*3GPP TSG RAN WG1 #99 R1-1912324*, 08 November 2019 (2019-11-08),<br>entire document | 1-22 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 June 2021** | **30 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

EP 4 132 168 A1

**INTERNATIONAL SEARCH REPORT**
Information on patent family members

International application No.

**PCT/CN2021/085633**

| Patent document cited in search report | | | Publication date (day/month/year) | Patent family member(s) | | | Publication date (day/month/year) |
|---|---|---|---|---|---|---|---|
| CN | 111510872 | A | 07 August 2020 | None | | | |
| CN | 110248412 | A | 17 September 2019 | WO | 2019170084 | A1 | 12 September 2019 |
| CN | 108633023 | A | 09 October 2018 | None | | | |
| CN | 108141847 | A | 08 June 2018 | US | 2017041902 | A1 | 09 February 2017 |
| | | | | US | 10616864 | B2 | 07 April 2020 |
| | | | | JP | 2018522478 | A | 09 August 2018 |
| | | | | WO | 2017027375 | A1 | 16 February 2017 |
| | | | | AU | 2016307444 | A1 | 15 February 2018 |
| | | | | JP | 6746624 | B2 | 26 August 2020 |
| | | | | EP | 3332593 | A4 | 03 April 2019 |
| | | | | AU | 2016307444 | B2 | 09 July 2020 |
| | | | | EP | 3332593 | A1 | 13 June 2018 |
| | | | | SG | 11201800627 | A1 | 27 February 2018 |

Form PCT/ISA/210 (patent family annex) (January 2015)